# EUROPEAN PATENT SPECIFICATION

(11) **EP 3 149 114 B1**
(45) Date of publication and mention of the grant of the patent: **06.09.2023**
(21) Application number: 15726731.1
(22) Date of filing: 26.05.2015
(51) Int. Cl.: C10G 45/02, C07C 1/207, C10G 45/58, C10G 3/00, C11B 7/00, C11C 1/00, C10G 45/06, C10G 45/12, C10G 45/62, C10G 45/64, C11B 3/06, C11B 13/00

(54) **PROCESS FOR PRODUCING A DIESEL HYDROCARBON FRACTION STARTING FROM A RENEWABLE FEEDSTOCK**
VERFAHREN ZUR HERSTELLUNG EINER DIESELKOHLENWASSERSTOFFFRAKTION AUS EINEM ERNEUERBAREN ROHSTOFF
PROCÉDÉ DE PRODUCTION D'UNE FRACTION D'HYDROCARBURE DE TYPE DIESEL À PARTIR D'UNE CHARGE RENOUVELABLE

(30) Priority: 29.05.2014 IT MI20140989
(43) Date of publication of application: 05.04.2017
(60) Divisional application: 23189044.3
(73) Proprietor: ENI S.p.A., 00144 Rome (IT)
(72) Inventor: BELLUSSI, Giuseppe, I-29122 Piacenza (PC) (IT); CALEMMA, Vincenzo, I-20097 San Donato Milanese (MI) (IT); DE ANGELIS, Alberto Renato, I-20025 Legnano (MI) (IT); ASSANELLI, Giulio, I-27100 Pavia (PV) (IT)
(74) Representative: Bottero, Carlo
(86) International application number: PCT/IB2015/053930
(87) International publication number: WO 2015/181721

(56) References cited:
- EP-A1- 2 290 045
- WO-A1-2007/027669
- WO-A2-2008/103204
- WO-A2-2014/111598
- US-A1- 2013 310 613
- US-A1- 2013 310 620

## Description

The present invention relates to a process for producing a diesel fraction starting from a renewable feedstock, such as, for example, a vegetable oil or a fat of an animal origin.

As is known, the increase in the extraction costs of petroleum due to the progressive exhaustion of natural reserves and a growing awareness with respect to problems relating to pollution of the environment have increased the necessity for using fuels alternative to fuels of a fossil origin, in particular fuels obtained from renewable energy sources, such as, for example, vegetable oils, fats of an animal origin, biomasses and algae.

Various processes are currently available in the specific field of fuels for diesel engines (diesel fuels), through which hydrocarbon fractions can be obtained which can be used as such as diesel fuels, or as components to be added to the diesel fuels obtained from fossil energy sources (so-called "biocomponents").

One of the technologies available for converting renewable feedstocks into diesel hydrocarbon fractions is a conversion process in two steps which comprises a first hydrotreating step of the starting feedstock followed by a subsequent hydroisomerization step.

The hydrotreating step envisages the treatment of the renewable feedstock with hydrogen in the presence of a catalyst. In this step, the feedstock is subjected to a catalytic hydrogenation reaction through which the saturation is obtained of the double bonds of the hydrocarbon chains of glycerides and the contemporaneous elimination of the oxygen atoms present on these chains. The above catalytic hydrogenation reaction, also called "hydrodeoxygenation" reaction, leads to the formation of a mixture of prevalently linear paraffins having a length substantially corresponding to that of the hydrocarbon chains of fatty acids which form glycerides. In the hydrodeoxygenation reaction, the glycerine part of the structure of the esters of fatty acids, under the reaction conditions, is converted to propane. Further byproducts are H₂O, CO₂, fuel gas and possibly CO.

The paraffins obtained through hydrotreatment have a boiling point within the distillation temperature range of hydrocarbons which typically form diesel fuels and kerosene. These paraffins, however, due to their linearity, are a diesel fuel with poor cold flow properties. This drawback can be overcome by subjecting the linear paraffins to a subsequent hydroisomerization step, in which the paraffinic mixture is treated with hydrogen in the presence of a hydroisomerization catalyst. In this step, a part of the linear paraffins is converted to branched paraffins, without substantially undergoing the cracking of the alkyl chain. The mixture of branched paraffins thus obtained can be used as diesel fuel or as biocomponents for fuels of a fossil origin with adequate performances also at low temperatures. Examples of treatment processes of renewable feedstocks which include the hydrotreatment and isomerization steps described above are provided in WO 2008/058664 and US 2009/0077867.

US 2013/310620 A1 discloses a process for producing paraffins from renewable feedstocks in which a hydrolysis process is integrated with the hydroprocessing step, producing products suitable for use as transportation fuels. Integration allows the use of common equipment which minimizes cost, raw material consumption, and energy requirements.

Although the treatment process of the known art described above is successfully applied industrially, it has various disadvantages.

First of all, the above refining process requires a high hydrogen consumption. This high consumption is due to the inevitable hydrogenation reaction of the glycerine part of the structure of the fatty acid esters with the formation of propane and water, which takes place during the hydrotreatment step. The transformation of the glycerine part into propane, moreover, prevents this part from being recovered in the form of glycerine and being used as raw material for subsequent uses, such as, for example, the production of biocomponents for diesel fuels.

A second drawback is the limited production capacity of the treatment process. As the hydrodeoxygenation reaction is a strongly exothermic reaction, in industrial practice, the hydrotreatment step is generally effected by recirculating a part of the reaction effluent containing linear paraffins, to this step, so as to control the process temperature. In some cases, the recirculation of the paraffins can reach up to values higher than 80% by weight referring to the weight of the stream at the inlet of this step, according to what is described, for example, in patent EP1741768 assigned to Neste Oil Oyi. This represents an evident limit to the full utilization of the production capacity of the process.

A further drawback of the treatment process of the known art is linked to the maximum quantity of impurities, such as alkaline and alkaline-earth metals, chlorine and phosphorous, that can be present in the renewable feedstock. Among these impurities, chlorine is one of the main causes of corrosion of the production plants. At present, in order to minimize problems of corrosion, the renewable feedstocks are subjected to one or more pre-treatment purification steps, which complicate the treatment process and increase the costs.

Among the above impurities, alkaline metals, alkaline-earth metals and phosphorous are among the main causes of poisoning of the catalysts used in the hydrodeoxygenation and hydroisomerization steps, as described, for example, in patent EP1741768.

The objective of the present invention is to overcome the drawbacks of the state of the art.

In particular, a specific objective of the present invention is to provide a process for preparing a diesel hydrocarbon fraction starting from a renewable feedstock which leads to a reduced hydrogen consumption.

A second objective of the present invention is to provide a process for preparing the above diesel hydrocarbon fraction which can be effected industrially with a higher production yield with respect to the refining processes of the known art.

A third objective of the present invention is to provide a process for preparing the above diesel hydrocarbon fraction in which there are reduced risks of corrosion of the production equipment.

A further objective of the present invention is to provide a process for the preparation of the above diesel hydrocarbon fraction, in which the deactivation rate of the hydrodeoxygenation catalysts due to the content of metals (alkaline and alkaline-earth) and phosphorous, is significantly reduced, without having to use any specific pre-treatment of the feedstock.

The Applicant has now found that these and other objectives, which will be better illustrated in the following description, can be achieved by effecting a process for preparing a diesel hydrocarbon fraction according to claim 1.

According to a preferred embodiment, the process of the present invention also comprises at least one phase (e) in which said diesel hydrocarbon fraction substantially comprising linear paraffins is subjected to catalytic hydroisomerization in the presence of hydrogen, so as to convert at least a part of said linear paraffins into branched paraffins and obtain a diesel hydrocarbon fraction with improved cold flow properties.

According to the process of the present invention, the renewable feedstock containing glycerides, in particular triglycerides, is treated initially with water in order to cause the splitting of the glycerides into glycerine and fatty acids (phase a). The glycerine is then separated (phase b) from the fatty acids, so as to avoid being subjected to hydrogenation in the subsequent hydrotreatment step (phase c). In the hydrotreatment step, the fatty acids are transformed into a diesel hydrocarbon fraction comprising substantially linear paraffins, which, in the subsequent hydroisomerization step (phase e), can be at least partly converted into branched paraffins.

As the glycerine component of the structure of the fatty acid esters is eliminated by the renewable feedstock upstream of the hydrotreatment step, its transformation into propane is avoided, significantly reducing the hydrogen consumption in this step. Furthermore, thanks to this separation, the glycerine recovered is upgraded as raw material for further uses.

As already indicated, the present invention relates to a process for preparing a diesel hydrocarbon fraction. For the purposes of the present invention, the expression "diesel hydrocarbon fraction" indicates a mixture of hydrocarbons having a total number of carbon atoms ranging from 9 to 22 and a boiling point at atmospheric pressure within the temperature range of hydrocarbons which typically form the diesel cut obtained from petroleum (180°C - 360°C), in particular the kerosene cut (C9-C₁₄, boiling range 180°C - 240°C, so-called jet *fuel*) and the gasoil cut (C₁₄-C₂₂, boiling range 240°C - 360°C). This diesel hydrocarbon fraction is obtained starting from a renewable feedstock.

For the purposes of the present invention, the expression "renewable feedstock" (hereinafter also indicated as "feedstock") includes feedstocks different from feedstocks deriving from petroleum.

The renewable feedstocks used for the purposes of the present invention comprise glycerides. The glycerides are generally in the form of triglycerides, but monoglycerides and diglycerides can also be present.

The hydrocarbon chain of fatty acids which form glycerides can typically contain from 11 to 21 carbon atoms and can be mono-unsaturated or poly-unsaturated.

The renewable feedstocks can be selected, for example, from vegetable oils, vegetable fats, animal fats, fish oils or mixtures thereof.

Some examples of renewable feedstocks are: sunflower oil, rapeseed oil, canola oil, palm oil, soybean oil, hempseed oil, olive oil, linseed oil, peanut oil, castor oil, mustard oil, coconut oil, oils deriving from algae or fatty oils contained in the pulp of pine trees ("tall oil"). The animal oils and fats can be selected from lard, tallow, milk fat or fats obtained from the poultry industry (chicken fat). Recycled oils and fats of the food industry, of both an animal and vegetable origin, can also be used. The vegetableoils or fats can also derive from plants selected by genetic manipulation. The above renewable feedstocks can be used alone or mixed with each other.

The renewable feedstocks can also contain free fatty acids. When present, the concentration of said free fatty acids can typically reach 30% by weight of the renewable feedstock. In the particular case of renewable feedstocks deriving from microalgae, the concentration of free fatty acids can also reach 60% by weight of the feedstock.

In the process according to the present invention, mixtures of renewable feedstocks together with hydrocarbons of an oil origin, can also be used.

Phase (a) of the process according to the present invention envisages the treatment of the renewable feedstock with water at a temperature within the range of 150-400°C and a pressure within the range of 1-20 MPa. Phase (a) is carried out without a catalyst.

Under these reaction conditions, the glycerides of the feedstock are split by hydrolysis, forming a mixture of fatty acids and glycerine. The fatty acids which are formed substantially correspond to the acids of the hydrocarbon chains of glycerides, as other reactions substantially do not take place during the hydrolysis.

The hydrolysis can be carried out in one or more reactors operating in continuous or in an autoclave.

At the end of the hydrolysis phase, the reaction mixture is treated to separate the fatty acids from the glycerine (phase b) according to separation methods known in the art. The hydrolysis reaction product is a biphasic mixture consisting of: (i) an aqueous phase (denser) in which the glycerine is dissolved, (ii) an organic phase (less dense) comprising fatty acids insoluble in water.

The separation of the aqueous phase containing glycerine can be effected, for example, by means of a continuous Florentine separator. The glycerine can then be recovered from the aqueous phase by means of distillation.

It has also been observed that, at the end of the hydrolysis reaction, the aqueous phase also comprises most of the impurities possibly present in the starting renewable feedstock, in particular alkaline and alkaline-earth metals, chlorine, sulfur (substantially in the form of SO₄²⁻ ions) and phosphorous (substantially in the form of PO₄³⁻ ions). Analogously to glycerine, therefore, these impurities are eliminated from the feedstock upstream of the hydrotreatment and isomerization steps, with a consequent reduction in corrosion phenomena of the plants caused by these substances, in particular chlorides, and with an increase in the useful life of the catalysts, due to a reduction in the content of alkaline, alkaline-earth metals and phosphorous.

The organic phase comprising fatty acids is fed to the subsequent catalytic hydrotreatment step (phase c), where the mixture of fatty acids is put in contact with a hydrotreatment catalyst in the presence of hydrogen.

In this step, there is the saturation of the unsaturated portions (e.g. double bonds) of the aliphatic chains of fatty acids and the removal of the oxygen atoms (deoxygenation) from the same chains. The above saturation and deoxygenation reactions are also indicated as a whole with the term hydrodeoxygenation (HDO) .

The above hydrodeoxygenation reaction generally takes place through hydrogenation, decarboxylation and decarbonylation reactions.

Hydrotreatment catalysts that can be used for the purposes of the present invention comprise hydrotreatment catalysts known in the state of the art.

The hydrotreatment catalysts generally comprise one or more metals supported on a solid substrate with a high surface area (typically higher than 100 m²/g).

Examples of solid substrates with a high surface area suitable for the purposes of the present invention are: γ-alumina, silica, activated carbon, oxides of one or more elements of groups IIIB and/or IVB, preferably titania, zirconia and ceria. The above substrates can be used alone or combined with each other.

The substrate can be amorphous or crystalline. The substrate preferably does not have substantially strong acid sites, typically Bronsted acid sites.

The substrate preferably contains a quantity of said strong acid sites lower than 2.0 micromoles/g.

The quantitative determination of the above acid sites can be effected as described in literature, for example in the article of D.G. Poduval, J. A. Rob van Vee, M. S. Rigutto, E. J. M. Hensen, Brønsted acid sites of zeolitic strength in amorphous silica-alumina, Chem. Commun., 2010, 46, 3466-68.

The acid sites in question, which are considered as being Bronsted acid sites, are capable of interacting with vapours of deuterated benzene at 303 K, creating one or more characteristic absorption bands in the IR spectrum of the substrate. These characteristic bands are generally observed within the range of 2675±10 cm⁻¹. In the case of amorphous silico-aluminas, this characteristic absorption band has a maximum around 2683 cm⁻¹. In amorphous silico-aluminas, this band is considered as being indicative of the presence of Bronsted acid sites with a strength comparable to the Brønsted acid sites of zeolites.

According to the method described in the above article of D.G. Poduval et al., the quantitative determination is based on the exchange of acid hydrogen atoms of the carrier with deuterium atoms (H/D exchange) of molecules of deuterated benzene (C₆D₆) and the subsequent IR spectroscopic analysis of characteristic absorption bands within the range of 2600 -2700 cm⁻¹.

The above determination comprises at least the following operative phases. First of all, a sample of catalyst is subjected to thermal treatment at 550°C and degassing under vacuum (residual pressure lower than or equal to 2×10⁻⁶ mbar). The sample of catalyst is then brought to a temperature of 303 K and exposed, at this temperature, to vapours of deuterated benzene (10 mbar) for 30 minutes. Due to this exposure, the deuterium atoms of the benzene exchange the hydrogen atoms of the acid sites involved, thus creating absorption bands within the spectral region of 2600-2700 cm⁻¹. At the end of the exposure, at least one IR spectrum of the catalyst is acquired. The value of the density of the active acid sites is obtained from the deconvolution of the characteristic absorption bands created in this spectral region, using the Lambert-Beer law taking into account the density (mg/cm²) of the sample.

For the purposes of the present invention, the catalyst preferably comprises one or more metals selected from Co and Ni. In addition to these metals, the catalyst can also comprise one or more metals of group VIB of the periodic table, preferably Mo and/or W.

In a particularly preferred embodiment, the catalyst comprises at least one pair of metals selected from Ni-Mo, Ni-W, Co-Mo, Co-W and mixtures thereof, more preferably Ni-Mo and/or Co-Mo.

The metals Co and/or Ni are preferably present in the catalyst in an overall quantity ranging from 3 to 8% by weight with respect to the total weight of the catalyst; when one or more metals of group VI are present, their overall quantity ranges from 10 to 30% by weight with respect to the total weight of the catalyst (the weight percentage of the metal refers to the metal content expressed as metallic element).

The above catalysts can also comprise phosphorous.

The catalysts are typically prepared by impregnation of the substrate with a solution containing a precursor of the metals of interest. Subsequent impregnations can be effected for reaching the desired charge level of the metal. The impregnation is then followed by a thermal treatment in an oxidizing atmosphere to decompose the precursor and obtain the metals dispersed on the surface of the substrate. The catalyst is subsequently subjected to an activation treatment by sulfidation. The sulfidation treatment is carried out according to the methods of the known art.

Processes are also known for the production of the above supported metal catalysts by precipitation of the metal precursor from a saline solution of the same metal on a carrier, or by co-precipitation of the various components of the catalyst, i.e. the metal and the carrier.

Further catalysts that can be used in the hydrotreatment step of the present invention are described, for example, in "Hydrocracking science and technology" J. Scherzer and A. J. Gruia, chapters 3 and 4, Marcel Dekker, 1996.

In order to keep the catalyst in sulfidized form during the reaction, a sulfiding agent (for example, dimethyldisulfide) can be added to the mixture of fatty acids. The total sulfur content in the mixture of fatty acids, can range, for example, from 0.02% to 0.5% by weight (140-3400 ppm of sulfur). Alternatively, a *"straight run"* gasoil with a high sulfur content (S >1% by weight) can be co-fed in a ratio of gasoil/mixture of fatty acids which is such as to obtain the above S content in the feedstock.

The HDO reaction can be carried out in a reaction zone comprising one or more catalytic beds, in one or more reactors. According to a preferred aspect, the reaction is carried out in a fixed-bed hydrotreatment reactor. The streams containing hydrogen and the mixture of fatty acids can be fed in equicurrent or in countercurrent. The reactor can have adiabatic catalytic beds in a number higher than or equal to two.

As this is an exothermic reaction, with the production of heat, in every catalytic bed there is a temperature rise as the reaction proceeds. In order to control the temperature of the reaction environment, a stream of hydrogen and/or a liquid feedstock can be fed, at a defined temperature, between one catalytic bed and the next, so as to create a constant or increasing temperature profile in the reaction area. This operating mode is normally indicated as *"splitted feed".*

In order to control the thermal profile in the reactor with adiabatic layers, said reactor is run by recirculating a portion of the reaction effluents leaving the head to the same hydrodeoxygenation step, according to the type known as recycling reactor. The function of the recycling is to dilute the fresh feedstock entering the reactor, thus limiting the thermal peaks due to the exothermic nature of the reaction.

In this respect, it should be observed that, unlike the processes of the known art, the hydrodeoxygenation reaction of the process according to the present invention is carried out on a mixture of fatty acids rather than on a mixture of triglycerides. The heat developed during the reaction is significantly lower with respect to the case of triglycerides, with the result that the temperature control by the addition of a diluting feedstock becomes simpler. In particular, considering that there is less heat to be dissipated, the process according to the present invention can be carried out by feeding a smaller quantity of diluting feedstock, with a consequent significant increase in the production yield of the process.

According to the present invention, for example, an adequate temperature control can be obtained by feeding a diluting feedstock equal to or lower than 30% by weight with respect to the weight of the total feedstock being fed to the inlet of phase (c), wherein total feedstock refers to the sum of the diluting feedstock and mixture of fatty acids.

The diluting feedstock, which is a portion of the diesel hydrocarbon fraction produced in the hydrodeoxygenation step, is recycled in a weight ratio within the range of 0.05 - 0.43 with respect to the weight of the mixture of fatty acids entering phase (c).

The hydrodeoxygenation reaction of the fatty acids is preferably carried out at a pressure ranging from 1 to 20 MPa, preferably ranging from 2 to 10 MPa.

The temperature at which the reaction is carried out preferably ranges from 240°C to 450°C, preferably from 250°C to 350°C.

It is preferable to operate at a space velocity of the liquid (LHSV) ranging from 0.5 to 2 hours⁻¹, even more preferably from 0.5 to 1 hours⁻¹.

The molar ratio H₂/mixture of fatty acids ranges from 5 to 30.

According to a particularly preferred aspect of the present invention, the molar ratio H₂/mixture of fatty acids ranges from 5 to 20 and more preferably from 5 to 10.

The product leaving the hydrodeoxygenation phase is an effluent which comprises a liquid portion and a gaseous portion. The liquid portion substantially comprises a mixture of paraffins. The paraffins are substantially composed of linear alkyl chains.

The gaseous portion comprises hydrogen, water vapour, CO₂ and fuel gas. CO and possibly small quantities of LPG and hydrogen sulfide (H₂S) can also be present.

The above gaseous and liquid portions can be separated by feeding said effluent to a high-pressure gas-liquid separator. The separator generally operates at a pressure ranging from 0.7 MPa to 14 MPa and at a temperature ranging from 40°C to 350°C.

The gaseous phase recovered from the separator essentially consists of hydrogen, water, CO₂ and small quantities of CO and H₂S. After separation, the gaseous phase can be cooled, in order to recover the water by condensation.

The remaining gaseous phase can be treated in order to recover the hydrogen, which can be recycled, for example, to the hydrodeoxygenation step or to the hydroisomerization step.

The recovery of the hydrogen can be effected by means of conventional industrial methods for the abatement of H₂S, such as, for example, washing the gaseous effluent with amines, for example, methylethylamine (MEA) or diethylamine (DEA). CO and CO₂ can be separated by absorption in absorbing solutions: for example, the CO can be absorbed in solutions of ammonia complexes of copper, whereas the CO₂ can be absorbed in aqueous solutions of alkaline carbonates.

The liquid portion separated in the high-pressure separator substantially comprises a mixture of linear paraffins with a number of carbon atoms typically ranging from 12 to 22. A fraction of said separated liquid portion can be possibly recycled at the head to the hydrodeoxygenation step as diluting feedstock for controlling the temperature of the process, as described above.

Depending on the operating conditions of the separator, the liquid portion can also contain small quantities of H₂O. The liquid portion can be advantageously treated with a gaseous hydrocarbon, for example CH₄, or nitrogen or hydrogen, in a stripper, in order to further reduce the water content.

The mixture of paraffins obtained from the hydrodeoxygenation step can be used as diesel fuel or as jet fuel. As this fraction substantially comprises linear paraffins, however, it is a low-quality fuel under low temperature conditions.

If the cold flow properties of this fraction are to be improved, at least a part of said fraction can be subjected to a further catalytic hydroisomerization step so as to convert at least a part of said linear paraffins into branched paraffins. This step can be effected by putting the hydrocarbon fraction comprising linear paraffins in contact with a hydroisomerization catalyst in the presence of hydrogen.

The hydroisomerization can be carried out in accordance with techniques known to skilled persons in the field, using hydroisomerization catalysts known in the art.

Hydroisomerization catalysts that can be used are, for example, catalysts comprising one or more metals of group VIII supported on at least one solid substrate.

The metals of group VIII are preferably selected from Pt, Pd, Ir and mixtures thereof. The metals are not subjected to sulfidation treatment, but are subjected to an activation pre-treatment in a stream of hydrogen, at a temperature generally ranging from 250 to 350 °C.

The metals of group VIII are preferably present in a total quantity ranging from 0.1% to 5% by weight with respect to the weight of the catalyst. The weight percentage of the metal(s), refers to the metal content expressed as metallic element.

The catalysts are typically prepared by impregnation of the substrate with a solution containing a precursor of the metals of interest. The impregnation is then followed by a thermal treatment in an oxidizing atmosphere to decompose the precursor and obtain the metals dispersed on the surface of the substrate, followed by the activation treatment described above.

The substrate can be selected, for example, from zeolites in acid form, silico-alumina, ASA (amorphous silica-alumina), SAPO, MSA, MSA-P (mesoporous silica-alumina with phosphorous) or mixtures thereof.

Zeolite in acid form refers to a zeolite containing Si and Al in the crystalline lattice, in which the cationic sites are prevalently or completely occupied by H⁺ ions.

The catalyst preferably comprises at least one zeolite in acid form as substrate, said zeolite preferably being selected from: zeolite Y, zeolite Beta, ZSM-22, ZSM-23, ZSM-12 and ZSM-5.

Further preferred catalysts are catalysts comprising a mixed substrate, such as, for example, Me/ZSM-22/Al₂O₃ and Me/ZSM-23/Al₂O₃, wherein Me is a metal of group VIII (e.g. Pt): in said catalysts, the alumina (Al₂O₃) does not act as carrier but as ligand.

The substrate can be amorphous or crystalline. The substrate preferably has acid sites capable of promoting the isomerization reaction of the linear paraffins into branched paraffins. The substrate preferably contains a quantity of said acid sites equal to or higher than 2.0 micromoles/g. The acid sites in question are capable of interacting with deuterated benzene vapours at 303 K, creating one or more characteristic absorption bands within the IR spectrum of the substrate. Said characteristic bands are generally within the range of 2675±10 cm⁻¹. The quantity of acid sites can be measured as described in literature, for example in the above-mentioned article of D.G. Poduval, J. A. Rob van Vee, M. S. Rigutto, E. J. M. Hensen, Bronsted acid sites of zeolitic strength in amorphous silica-alumina, Chem. Commun., 2010, 46, 3466-68.

According to a particularly preferred aspect of the present invention, in accordance with what is described in WO 2008/058664 and in WO 2008/113492, a catalyst can be used, consisting of a catalytic composition comprising:
(a) a carrier of an acid nature comprising an amorphous micro-mesoporous silico-alumina having a molar ratio SiO₂/Al₂O₃ ranging from 30 to 500, a surface area greater than 500 m²/g, a pore volume ranging from 0.3 to 1.3 ml/g, an average pore diameter less than 40 Å,
(b) a metallic component comprising one or more metals of group VIII.

Amorphous micro-mesoporous silico-aluminas that can be used as carrier (a) of the catalytic compositions of the hydroisomerization step of the present invention are described, for example, in US 5049536, EP 659478, EP 812804, and called MSA. MSAs have a substantially amorphous crystallographic structure, as their XRD powder spectrum does not reveal any significant peak. US 5049536, EP 659478, EP 812804 describe various methods for preparing silico-aluminas suitable as carrier (a).

As far as the metals are concerned, in the above catalytic compositions, the metal or metals of group VIII are preferably selected from Pt, Pd, Ir and mixtures thereof.

Catalytic compositions that can be used in the hydroisomerization step are described, for example, in WO2005/103207.

The hydroisomerization catalyst can be formulated and formed into extruded products having various forms (e.g. cylinders, trilobates, etc.), as described, for example, in EP 1101813.

The hydroisomerization phase can be effected in a reaction zone comprising one or more catalytic beds in one or more reactors. The hydroisomerization is preferably carried out in a fixed-bed reactor. The thermal control in this case is not critical as the reaction is weakly exothermic. For this reason, a reactor with adiabatic layers is appropriate.

The mixture of paraffins deriving from the hydrodeoxygenation step can be fed to the hydroisomerization area in equicurrent or in countercurrent with respect to the hydrogen.

The hydroisomerization can be carried out, for example, at a temperature ranging from 250°C to 450°C, preferably from 280°C to 380°C, and at a pressure ranging from 2.5 MPa to 10.0 MPa, preferably from 3.0 MPa to 5.0 MPa. It is preferable to operate at a space velocity (LHSV) ranging from 0.5 to 2 hours⁻¹. The volumetric ratio H₂/mixture of paraffins preferably ranges from 200 to 1,000 Nl (H₂)/l (paraffins).

The conditions under which the hydroisomerization reaction is carried out can be suitably selected to obtain a final product having the desired characteristics. By varying the reaction conditions, for example, mixtures of paraffins can be obtained with improved cold flow properties and therefore more similar to those of diesel fuel or jet fuel with which the hydroisomerization product can be subsequently combined as bio-component.

By suitably varying the reaction conditions of the second step, in addition to varying the isomerization degree of the paraffins, it is also possible to change the distribution of the products, maximizing the yield to either the gasoil cut or jet fuel cut.

The mixture obtained in the hydroisomerization step can be subjected to distillation to obtain said jet fuel and gasoil hydrocarbon fractions to be used as fuel or as bio-component in fuels of a petroleum origin. A naphtha fraction (C₅-C₉, boiling range 80°C - 180°C) which can be used as gasoline component, can also be recovered from the distillation.

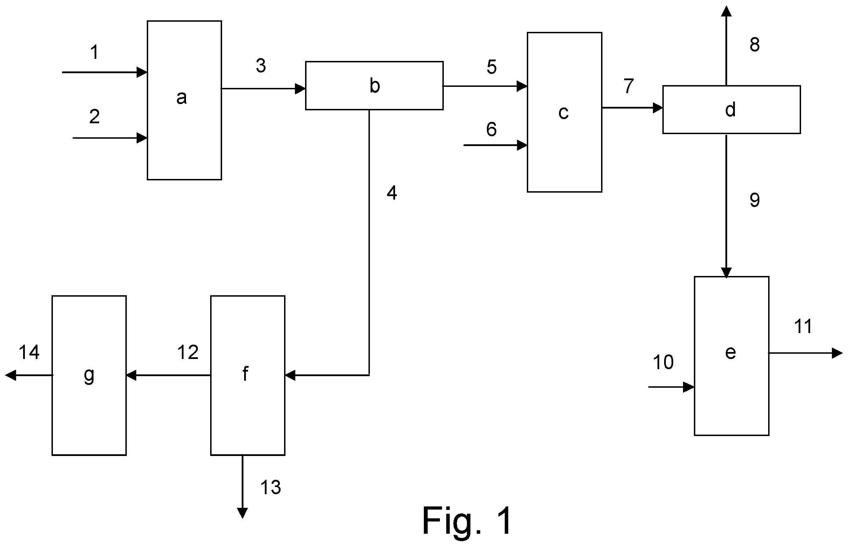

An embodiment example of the process according to the present invention is described hereunder with reference to the scheme of the enclosed Figure 1. The following example is provided for purely illustrative purposes of the present invention and should not be considered as limiting the protection scope defined by the enclosed claims.

With reference to Figure 1, the renewable feedstock is fed to the hydrolysis reactor (a) through line 1. The water necessary for the hydrolysis reaction is fed to the same reactor (a) through line 2. The mixture resulting from the hydrolysis, containing fatty acids, glycerine, water and possible impurities (alkaline metals, chlorine, phosphorous, etc.) is sent, through line 3, to a first separator (b). In said first separator (b), the organic phase containing fatty acids is separated from the aqueous phase containing glycerine and possible impurities. The aqueous phase leaving the above first separator (b) is fed, through line 4, to a second separator (f), for example a distillation column, where the glycerine is recovered, through line 12, and the remaining water containing possible impurities, through line 13. The aqueous fraction-glycerine can be possibly subjected to a treatment with exchange resins, before being distilled, in order to remove the salts present.

The glycerine leaving the second separator (f), through line 12, is fed to a subsequent reaction area (g) where it is used as raw material for producing bio-components for diesel fuel (line 14), for example through the process described in patent application WO 2013150457.

The organic phase containing fatty acids leaving the first separator (b) is fed, through line 5, to a hydrodeoxygenation reactor (c), where it is reacted with a stream of hydrogen which is fed to the same reactor (c), through line 6. The mixture leaving the hydrodeoxygenation reactor (c), is sent to a high-pressure gas-liquid separator (d), through line 7. The gaseous phase comprising hydrogen, water vapour, CO and CO₂ is recovered at the outlet of the separator (d), through line 8, whereas the liquid phase containing linear paraffins is recovered, through line 9, which is subsequently fed to a hydroisomerization reactor (e). The hydrogen necessary for the hydroisomerization reaction is fed, through line 10, to said reactor (e) . The mixture containing the isomerized paraffins is recovered, at the outlet of the reactor (e), through line 11. The glycerine leaving the second separator (f), through line 12, is fed to a subsequent reaction area (g) where it is used as raw material for producing bio-components for diesel fuel (line 14), for example through the process described in patent application WO 2013150457. The processes of the following examples do not fall under the scope of the claims but relate to different process phases thereof.

### EXAMPLE 1 - Hydrolysis of palm oil

19.64 g of a renewable feedstock consisting of palm oil and 40.11 g of water are charged into a steel autoclave. The autoclave is then heated up to 285°C. At this temperature, the autoclave reaches an autogenous pressure of 6.6 MPa.

The reaction mixture is kept under stirring at this temperature for a period of 3 hours. The autoclave is then cooled to 40°C.

The reaction product is a biphasic mixture, consisting of an upper organic phase and a lower aqueous phase. The upper organic phase is composed of (% moles) : palmitic acid 44%, oleic acid 39%, linoleic acid 10%, stearic acid 4%, non-converted palm oil 2%, glycerol 1%. The underlying aqueous phase substantially comprises water and glycerine.

The conversion of the palm oil is equal to 98%. The selectivity to the desired products is complete.

The starting palm oil contained impurities of chlorine, calcium ions, sodium ions and sulfate ions. A quantitative analysis of the aqueous phase shows that the impurities are distributed in this phase in the following weight percentages (referring to the weight of the corresponding impurities in the starting oil)
- chloride ions 100%
- calcium ions 73%,
- sodium ions 82%,
- sulfate ions 75%

### EXAMPLE 2 - Hydrolysis of castor oil

20.13 g of castor oil and 40.37 g of water are charged into a steel autoclave. The autoclave is then heated up to 285°C. At this temperature, the autoclave reaches an autogenous pressure of 6.6 MPa.

The reaction mixture is kept under stirring at this temperature for a period of 3 hours. The autoclave is then cooled to 40°C. The reaction product is a biphasic mixture, consisting of an upper organic phase and a lower aqueous phase.

The upper organic phase is composed of (% moles): ricinoleic acid 89%, oleic acid 5%, linoleic acid 3%, palmitic acid 1%, non-converted castor oil 1%, glycerol 1%. The underlying aqueous phase substantially comprises water and glycerine.

The conversion of the castor oil is equal to 99%. The selectivity to the desired products is complete.

### EXAMPLE 3 - Hydrolysis of sunflower oil

19.37 g of sunflower oil and 40.02 g of water are charged into a steel autoclave. The autoclave is then heated up to 285°C. At this temperature, the autoclave reaches an autogenous pressure of 6.6 MPa.

The reaction mixture is kept under stirring at this temperature for a period of 3 hours. The autoclave is then cooled to 40°C.

The reaction product is a biphasic mixture, consisting of an upper organic phase and a lower aqueous phase. The upper organic phase is composed of (% moles) : linoleic acid 69%, oleic acid 20%, palmitic acid 7%, stearic acid 2%, non-converted sunflower oil 1%, glycerol 1%. The underlying aqueous phase substantially comprises water and glycerine.

The conversion of the sunflower oil is equal to 99%. The selectivity to the desired products is complete.

### EXAMPLE 4 - Hydrolysis of grapeseed oil

19.24 g of grapeseed oil and 40.15 g of water are charged into a steel autoclave. The autoclave is then heated up to 285°C. At this temperature, the autoclave reaches an autogenous pressure of 6.6 MPa.

The reaction mixture is kept under stirring at this temperature for a period of 3 hours. The autoclave is then cooled to 40°C.

The reaction product is a biphasic mixture, consisting of an upper organic phase and a lower aqueous phase. The upper organic phase is composed of (% moles) : linoleic acid 71%, oleic acid 16%, palmitic acid 8%, stearic acid 3%, non-converted grapeseed oil 1%, glycerol 1%. The underlying aqueous phase substantially comprises water and glycerine.

The conversion of the grapeseed oil is equal to 99%. The selectivity to the desired products is complete.

### EXAMPLE 5 - Hydrotreatment (HDO) of a mixture of fatty acids

The organic phase, consisting of the mixture of fatty acids obtained according to what is described in Example 1, was subjected to hydrotreatment (HDO) on a Ni-Mo catalyst dispersed on alumina in the presence of hydrogen.

The catalyst was prepared as follows: 40 ml of an aqueous solution containing 5.5 g of Mo₇(NH₄)₆O₂₄*4H₂O are added to 10 g of γ-alumina placed in a rotary evaporator (60 rpm). The mixture is left under stirring for 16 hours, the water is then evaporated at 110°C in air for 1 hour. A second impregnation is then effected following the same procedure described above using an aqueous solution containing 1.5 g of Ni(NO₃)₂*6 H₂O. The mixture is left under stirring for 16 hours and the water is then evaporated at 110°C in air for 1 hour. The powder thus obtained is calcined in a muffle furnace at 500°C for 4 hours in air, heating at a rate of 3 °C min⁻¹. The calcined powder is pressed into tablets at a pressure of 3.5 t/cm², the tablets are then crushed and the powder fraction having a particle-size within the range of 0.40-0.85 mm is used for the reaction.

The catalyst proves to contain 27.2% by weight of Mo and 3.2% by weight of Ni and has a BET surface area of 92 m²g⁻¹.

The catalyst used for the hydrodeoxygenation reaction was sulfided using dodecane containing dimethyldisulfide (DDMS) having a sulfur concentration of 1% by weight.

The solution of DDMS in dodecane is fed together with hydrogen under the following conditions:
space velocity (LHSV) = 1 h⁻¹, hydrogen flow-rate 40 Nl/h, pressure 40 bar, temperature 25°C.

The temperature of the reactor is then increased from 25 to 120°C, at a rate of 5°C per minute; the temperature is maintained for an hour at 120°C, and is then increased to 230°C at 10°C per minute and this temperature (230°C) is maintained for eight hours; finally, the temperature is increased up to 315°C at a rate of 10°C per minute and is kept at this temperature (315°C) for four hours.

The HDO reaction was carried out in a fixed-bed reactor, at a pressure of 6 MPa, with a space velocity of the liquid (LHSV) equal to 1 h⁻¹ and at a temperature of 300°C.

A flow of n-dodecane was fed to the reactor together with the mixture of fatty acids, in order to simulate the recirculation conditions of a fraction of linear paraffins which can be obtained from the HDO reaction. The feedstock fed to the reactor contained 70% by weight of n-dodecane and 30% by weight of fatty acids.

In order to keep the catalyst in a sulfided sate, dimethylsulfide was added to the above feedstock in a concentration equal to 0.5% by weight with respect to the weight of the feedstock.

The volumetric feeding ratio between hydrogen and feedstock fed, was equal to 900 Nl H₂/l of feedstock fed.

The reaction products were collected and analyzed by means of gas chromatography. A complete conversion of the mixture of fatty acids was revealed by the chromatographic analysis.

Table 1 below indicates the selectivity values of the paraffins obtained from the HDO reaction in relation to the reaction time. The selectivities are expressed as molar percentage of the sum of paraffins having from 15 to 18 carbon atoms (C₁₅ - C₁₈) with respect to the initial moles of fatty acid fed.

**Table 1**

| Time (h) | Selectivity C₁₈ - C₁₅ (mol%) |
|---|---|
| 10 | 96.1 |
| 25 | 96.8 |
| 50 | 94.3 |
| 100 | 94.4 |

The paraffins obtained are substantially linear paraffins.

Table 2 below indicates the molar selectivity values of the water and sum of CO₂ and CO in relation to the reaction time. The selectivities are expressed as molar percentages of "H₂O" and "CO₂ + CO" referring to number of total oxygen moles present in the feedstock fed to the reactor.

**Table 2**

| Time (h) | Selectivity CO₂ + CO (mol%) | Selectivity H₂O (mol%) |
|---|---|---|
| 10 | 37.2 | 62.8 |
| 25 | 35.8 | 64.2 |
| 50 | 41.0 | 59 |
| 100 | 40.8 | 59.1 |

### EXAMPLE 6 - Isomerization of the mixture of paraffins

The mixture of paraffins obtained according to what is described in Example 5, was subjected to a hydroisomerization reaction on a catalyst of Pt dispersed on amorphous silico-alumina in the presence of hydrogen. The Pt content is equal to 0.6% by weight with respect to the weight of the catalyst. The catalyst was prepared according to what is described in patent application EP 1101813 A1 *("preparative example* 2") .

The hydroisomerization reaction was carried out in a fixed-bed reactor at a pressure of 5 MPa, with a space velocity of the liquid equal to 1.5 h⁻¹ (LHSV) and at a temperature of 320°C.

The mixture of paraffins obtained according to what is described in Example 5, was subjected to distillation to separate the "C₁₂<" fraction (i.e. the fraction of paraffins having a number of carbon atoms equal to or lower than 12). The heavier fraction, on the other hand, was subjected to hydroisomerization.

In the effluent fed to the reactor, the volumetric ratio between hydrogen and feedstock of paraffins was equal to 400 Nl of H₂/l of feedstock of paraffins.

The reaction products were collected and analyzed by means of gas chromatography. A complete conversion of the mixture of fatty acids was revealed by the chromatographic analysis.

Table 3 below indicates the distribution of the products of the hydroisomerization reaction in relation to the reaction time.

The distribution of the products is expressed as weight percentage of the paraffins having from 15 to 18 carbon atoms (C₁₅ - C₁₈) and paraffins having a number of carbon atoms equal to or lower than 14 (C₁₄<) referring to the total weight of paraffins fed to the reactor.

**Table 3**

| Time (h) | C₁₄< (mol%) | C₁₅-C₁₈ (mol%) | Ratio iso/normal paraffin * |
|---|---|---|---|
| 10 | 8.1 | 91.9 | 77 |
| 24 | 10.2 | 89.8 | 75 |
| 52 | 9.7 | 90.2 | 81 |
| 103 | 11.0 | 89.1 | 74 |

| | | | |
|---|---|---|---|
| * Ratio between the total weight of C₁₅-C₁₆ isoparaffins and the total weight of the fraction of C₁₅-C₁₆ paraffins. | | | |

## Claims

1. A process for preparing a diesel hydrocarbon fraction from renewable feedstock comprising glycerides and recovering glycerine, said process comprising the following phases:
(a) reacting at least a renewable feedstock comprising glycerides with water, without a catalyst, at a temperature within the range of 150-400°C and a pressure within the range of 1-20 MPa, forming at least a mixture of fatty acids and glycerine;
(b) separating said glycerine from said mixture of fatty acids;
(c) subjecting said mixture of fatty acids to catalytic hydrotreatment in the presence of hydrogen, said catalytic hydrotreatment being a hydrodeoxygenation carried out at a molar ratio H₂/mixture of fatty acids within the range from 5 to 30, obtaining a reaction product comprising:
- at least one gaseous effluent comprising hydrogen, water vapour, CO₂, possibly CO, and
- at least one diesel hydrocarbon fraction comprising a mixture of substantially linear paraffins;
(d) separating said diesel hydrocarbon fraction from said reaction product recycling part of said diesel hydrocarbon fraction to said phase (c) in a weight ratio within the range of 0.05-0.43 with respect to the weight of the mixture of fatty acids,
wherein the glycerine separated in step (b) is fed to a second separator in which the glycerine is recovered from an aqueous phase containing glycerine and the glycerine leaving said second separator is fed as raw material to a subsequent reaction area for producing biocomponents of diesel fuel.

2. The process according to claim 1, also comprising a phase (e) for subjecting said diesel hydrocarbon fraction separated in said separation phase (d) to catalytic hydroisomerization in the presence of hydrogen.

3. The process according to any of the previous claims, wherein said hydrogen is separated from said gaseous effluent and partly recycled to said hydrotreatment phase (c) or said hydroisomerization phase (e)

4. The process according to any of the previous claims, wherein said catalytic hydrotreatment is carried out at a temperature within the range of 240-450°C.

5. The process according to any of the previous claims, wherein said catalytic hydrotreatment is carried out at a pressure within the range of 1-20 MPa.

6. The process according to any of the previous claims, wherein said catalytic hydrotreatment is carried out in the presence of a hydrotreatment catalyst comprising at least one or more metals selected from Co and Ni, possibly combined with one or more metals of group VIB, supported on a solid substrate.

7. The process according to the previous claim, wherein said solid substrate is selected from γ-alumina, silica, activated carbon, oxides of one or more elements of groups IIIB and/or IVB, and mixtures thereof.

8. The process according to claim 6 or 7 , wherein said hydrotreatment catalyst comprises at least a pair of metals selected from Ni-Mo, Ni-W, Co-Mo and Co-W.

9. The process according to the previous claim, wherein said hydrotreatment catalyst is a sulfided catalyst.

10. The process according to the previous claim, wherein at least one sulfiding agent is fed to said hydrotreatment phase (c).

11. The process according to any of the previous claims from 2 to 10, wherein said hydroisomerization phase (e) is carried out at a temperature within the range of 250-450°C.

12. The process according to any of the previous claims from 2 to 11, wherein said hydroisomerization phase (e) is carried out at a pressure within the range of 2.5-10.0 MPa.

13. The process according to any of the previous claims from 2 to 12, wherein said hydroisomerization phase (e) is carried out in the presence of a catalytic composition comprising one or more metals selected from metals of group VIIIB supported on at least one substrate selected from zeolite in acid form, silico- alumina, ASA, SAPO, MSA, MSA-P or mixtures thereof.

## Patentansprüche

1. Verfahren zur Herstellung einer Dieselkohlenwasserstofffraktion aus erneuerbarem Rohstoff, umfassend Glyceride, und Rückgewinnung von Glycerin, wobei das Verfahren die folgenden Phasen umfasst:
(a) Reagieren mindestens eines erneuerbaren Rohstoffs, umfassend Glyceride, mit Wasser, ohne einen Katalysator, bei einer Temperatur im Bereich von 150-400°C und einem Druck im Bereich von 1-20 MPa, um zumindest ein Gemisch von Fettsäuren und Glycerin zu bilden;
(b) Abtrennen des Glycerins von dem Gemisch von Fettsäuren;
(c) Unterziehen des Gemisches von Fettsäuren einer katalytischen Hydrobehandlung in Gegenwart von Wasserstoff, wobei die katalytische Hydrobehandlung eine Hydrodeoxygenierung ist, die bei einem molaren Verhältnis H₂/Gemisch von Fettsäuren im Bereich von 5 bis 30 durchgeführt wird, wobei ein Reaktionsprodukt erhalten wird, das umfasst:
- mindestens einen gasförmigen Abstrom, umfassend Wasserstoff, Wasserdampf, COz, gegebenenfalls CO, und
- mindestens eine Dieselkohlenwasserstofffraktion, umfassend ein Gemisch von im Wesentlichen linearen Paraffinen;
(d) Abtrennen der Dieselkohlenwasserstofffraktion von dem Reaktionsprodukt, wobei ein Teil der Dieselkohlenwasserstofffraktion zu der Phase (c) in einem Gewichtsverhältnis im Bereich von 0,05-0,43 in Bezug auf das Gewicht des Gemisches von Fettsäuren rezykliert wird,
wobei das in Schritt (b) abgetrennte Glycerin einem zweiten Separator zugeführt wird, in dem das Glycerin aus einer Glycerin enthaltenden wässrigen Phase rückgewonnen wird und das den zweiten Separator verlassende Glycerin als Rohmaterial einem nachfolgenden Reaktionsbereich zur Herstellung von Biokomponenten von Dieselkraftstoff zugeführt wird.

2. Das Verfahren nach Anspruch 1, das auch eine Phase (e) umfasst, zum Unterziehen der in der Abtrennphase (d) abgetrennten Dieselkohlenwasserstofffraktion einer katalytischen Hydroisomerisierung in Gegenwart von Wasserstoff.

3. Das Verfahren nach einem der vorhergehenden Ansprüche, wobei der Wasserstoff aus dem gasförmigen Abstrom abgetrennt und teilweise in die Hydrobehandlungsphase (c) oder die Hydroisomerisierungsphase (e) rezykliert wird

4. Das Verfahren nach einem der vorhergehenden Ansprüche, wobei die katalytische Hydrobehandlung bei einer Temperatur im Bereich von 240-450°C durchgeführt wird.

5. Das Verfahren nach einem der vorhergehenden Ansprüche, wobei die katalytische Hydrobehandlung bei einem Druck im Bereich von 1-20 MPa durchgeführt wird.

6. Das Verfahren nach einem der vorhergehenden Ansprüche, wobei die katalytische Hydrobehandlung in Gegenwart eines Hydrobehandlungskatalysators durchgeführt wird, der mindestens ein oder mehrere Metalle, ausgewählt aus Co und Ni, möglicherweise in Kombination mit einem oder mehreren Metallen der Gruppe VIB, geträgert auf einem festen Substrat umfasst.

7. Das Verfahren nach dem vorhergehenden Anspruch, wobei das feste Substrat ausgewählt ist aus γ-Aluminiumoxid, Siliciumdioxid, Aktivkohle, Oxiden eines oder mehrerer Elemente der Gruppen IIIB und/oder IVB und Gemischen davon.

8. Das Verfahren nach Anspruch 6 oder 7, wobei der Hydrobehandlungskatalysator mindestens ein Paar von Metallen, ausgewählt aus Ni-Mo, Ni-W, Co-Mo und Co-W, umfasst.

9. Das Verfahren nach dem vorhergehenden Anspruch, wobei der Hydrobehandlungskatalysator ein sulfidierter Katalysator ist.

10. Das Verfahren nach dem vorhergehenden Anspruch, wobei mindestens ein Sulfidierungsmittel in der Hydrobehandlungsphase (c) zugeführt wird.

11. Das Verfahren nach einem der vorhergehenden Ansprüche 2 bis 10, wobei die Hydroisomerisierungsphase (e) bei einer Temperatur im Bereich von 250-450°C durchgeführt wird.

12. Das Verfahren nach einem der vorhergehenden Ansprüche 2 bis 11, wobei die Hydroisomerisierungsphase (e) bei einem Druck im Bereich von 2,5-10,0 MPa durchgeführt wird.

13. Das Verfahren nach einem der vorhergehenden Ansprüche 2 bis 12, wobei die Hydroisomerisierungsphase (e) in Gegenwart einer katalytischen Zusammensetzung, umfassend ein oder mehrere Metalle, ausgewählt aus Metallen der Gruppe VIIIB, geträgert auf mindestens einem Substrat, ausgewählt aus Zeolith in saurer Form, Silico-Aluminiumoxid, ASA, SAPO, MSA, MSA-P oder Gemischen davon, durchgeführt wird.

## Revendications

1. Procédé pour la préparation d'une fraction d'hydrocarbures diesel à partir d'une charge d'alimentation renouvelable comprenant des glycérides et la récupération de glycérine, ledit procédé comprenant les phases suivantes:
(a) faire réagir au moins une charge d'alimentation renouvelable comprenant des glycérides avec de l'eau, sans catalyseur, à une température comprise dans la plage de 150 à 400 °C et une pression comprise dans la plage de 1 à 20 MPa, pour former au moins un mélange d'acides gras et de la glycérine;
(b) séparer ladite glycérine dudit mélange d'acides gras;
(c) soumettre ledit mélange d'acides gras à un hydrotraitement catalytique en présence d'hydrogène, ledit hydrotraitement catalytique étant une hydrodésoxygénation effectuée à un rapport molaire H₂/mélange d'acides gras compris dans la plage allant de 5 à 30, pour obtenir un produit réactionnel comprenant:
- au moins un effluent gazeux comprenant de l'hydrogène, de la vapeur d'eau, du COz, éventuellement du CO, et
- au moins une fraction d'hydrocarbures diesel comprenant un mélange de paraffines sensiblement linéaires;
(d) séparer ladite fraction d'hydrocarbures diesel dudit produit réactionnel en recyclant une partie de ladite fraction d'hydrocarbures diesel vers ladite phase (c) en un rapport massique compris dans la plage de 0,05 à 0,43 par rapport à la masse du mélange d'acides gras,
dans lequel la glycérine séparée à l'étape (b) est introduite dans un second séparateur dans lequel la glycérine est récupérée à partir d'une phase aqueuse contenant de la glycérine et la glycérine sortant dudit second séparateur est introduite comme matière première dans une zone réactionnelle subséquente pour la production de biocomposants de carburant diesel.

2. Procédé selon la revendication 1, comprenant également une phase (e) consistant à soumettre ladite fraction d'hydrocarbures diesel séparée dans ladite phase de séparation (d) à une hydroisomérisation catalytique en présence d'hydrogène.

3. Procédé selon n'importe laquelle des revendications précédentes, dans lequel ledit hydrogène est séparé dudit effluent gazeux et partiellement recyclé vers ladite phase d'hydrotraitement (c) ou ladite phase d'hydroisomérisation (e).

4. Procédé selon n'importe laquelle des revendications précédentes, dans lequel ledit hydrotraitement catalytique est effectué à une température comprise dans la plage de 240 à 450 °C.

5. Procédé selon n'importe laquelle des revendications précédentes, dans lequel ledit hydrotraitement catalytique est effectué à une pression comprise dans la plage de 1 à 20 MPa.

6. Procédé selon n'importe laquelle des revendications précédentes, dans lequel ledit hydrotraitement catalytique est effectué en présence d'un catalyseur d'hydrotraitement comprenant au moins un ou plusieurs métaux sélectionnés parmi Co et Ni, éventuellement combinés avec un ou plusieurs métaux du groupe VIB, supportés sur un substrat solide.

7. Procédé selon la revendication précédente, dans lequel ledit substrat solide est sélectionné parmi la g-alumine, la silice, le charbon actif, les oxydes d'un ou de plusieurs éléments des groupes IIIB et/ou IVB, et des mélanges de ceux-ci.

8. Procédé selon la revendication 6 ou 7, dans lequel ledit catalyseur d'hydrotraitement comprend au moins une paire de métaux sélectionnée parmi Ni-Mo, Ni-W, Co-Mo et Co-W.

9. Procédé selon la revendication précédente, dans lequel ledit catalyseur d'hydrotraitement est un catalyseur sulfuré.

10. Procédé selon la revendication précédente, dans lequel au moins un agent sulfurant est introduit dans ladite phase d'hydrotraitement (c).

11. Procédé selon n'importe laquelle des revendications précédentes de 2 à 10, dans lequel ladite phase d'hydroisomérisation (e) est effectuée à une température comprise dans la plage de 250 à 450 °C.

12. Procédé selon n'importe laquelle des revendications précédentes de 2 à 11, dans lequel ladite phase d'hydroisomérisation (e) est effectuée à une pression comprise dans la plage de 2,5 à 10,0 MPa.

13. Procédé selon n'importe laquelle des revendications précédentes de 2 à 12, dans lequel ladite phase d'hydroisomérisation (e) est effectuée en présence d'une composition catalytique comprenant un ou plusieurs métaux sélectionnés parmi les métaux du groupe VIIIB supportés sur au moins un substrat sélectionné parmi la zéolite sous forme acide, la silice-alumine, l'ASA, le SAPO, la MSA, la MSA-P ou des mélanges de ceux-ci.
